# EUROPÄISCHE PATENTSCHRIFT

(11) **EP 1 600 360 B1**
(45) Veröffentlichungstag und Bekanntmachung des Hinweises auf die Patenterteilung: **23.01.2008**
(21) Anmeldenummer: 05011057.6
(22) Anmeldetag: 21.05.2005
(51) Int. Cl.: B62D 25/08

(54) **Trägereinheit für einen Frontbereich eines Kraftfahrzeuges**
Carrier for the front of a motor vehicle
Unité de support pour face avnt de véhicule motorisé

(30) Priorität: 28.05.2004 DE 102004026283
(43) Veröffentlichungstag der Anmeldung: 30.11.2005
(73) Patentinhaber: MAN Nutzfahrzeuge Aktiengesellschaft, 80995 München (DE)
(72) Erfinder: Häberle, Hartmut (Dipl.-Ing.), 81247 München (DE); Rahlf, Gerhard (Dipl.-Ing.), 85757 Karlsfeld (DE); Kneifel, Eberhard (Dipl.-Ing.), 89250 Senden (DE)

(56) Entgegenhaltungen:
- DE-A1- 19 919 258
- FR-A- 2 481 218
- FR-A- 2 655 605
- FR-A- 2 668 436
- FR-A- 2 796 030

## Beschreibung

### Technisches Gebiet

Die Erfindung betrifft eine Trägereinheit für einen Frontbereich eines Kraftfahrzeugs, die ein Stützelement und einen Stoßfängerträger, an dem zumindest ein Element zur Anbringung wenigstens einer Stoßfängerblende vorgesehen ist, aufweist und die über ein Befestigungselement verfügt, mit dem das Stützelement mit wenigstens einem Rahmen des Kraftfahrzeugs verbindbar ist.

### Stand der Technik

Im Frontbereich eines Kraftfahrzeugs befindet sich eine Vielzahl unterschiedlicher Fahrzeugkomponenten, wobei üblicherweise eine mit dem Fahrzeugrahmen verbindbare Tragstruktur vorgesehen ist, an der die Fahrzeugkomponenten als Anbauteile befestigt werden. Unter Anbauteilen sind in diesem Zusammenhang sowohl Karosserieelemente, insbesondere der Stoßfänger oder Verkleidungen, als auch Funktionselemente, wie bspw. Scheinwerfer, Blinker, Abstandskontrollsystem oder Scheinwerferreinigung, zu verstehen.

Die heutzutage im Fahrzeugbau verwendeten Tragstrukturen werden während eines Fertigungs- bzw. Montageprozesses aus mehreren Komponenten, bspw. durch Schweißen, zu einem Bauteil verfügt. Die auf diese Weise hergestellten, mehrteilig ausgeführten Tragstrukturen sind allerdings normalerweise nicht selbsttragend, so dass im Regelfall Stützkonstruktionen aus Stahl in die Tragstrukturen integriert werden. Die Stützkonstruktionen stellen hierbei keine Designflächen, an die bzgl. der Formgestaltung sowie der Oberflächengüte besondere Anforderungen gestellt werden, dar, so dass derartige Stützkonstruktionen mit vergleichsweise großen Maßtoleranzen unter Einsatz einfacher Fertigungsmittel herstellbar sind. Die Bauteile, vor allem Kunststoffbauteile, die die Designfläche bilden, werden mit Hilfe von Schrauben oder Nieten auf den Stützkonstruktionen befestigt.

Neben der Optimierung der vorbeschriebenen Tragstrukturen mit den integrierten Stützkonstruktionen hinsichtlich des Fertigungsaufwandes sowie des Platzbedarfs ist die Reduzierung des Gewichts dieser Bauteile von immer größerer Bedeutung, da sich das Gewicht einer Fahrzeugkomponente direkt auf den Kraftstoffverbrauch eines Kraftfahrzeugs auswirkt.

Eine Reduzierung des Leergewichts ist darüber hinaus insbesondere bei Nutzfahrzeugen von großer Bedeutung, da auf diese Weise die Nutzlast eines Fahrzeugs erhöht und letztendlich die Wirtschaftlichkeit verbessert wird. Aus den vorgenannten Gründen wurden in den letzten Jahren für die Realisierung von Tragstrukturen im Frontbereich von Kraftfahrzeugen eine Vielzahl technischer Lösungen vorgeschlagen, die auf der Verwendung von leichten Werkstoffen, insbesondere Leichtmetallen, oder einer Kombination von Stahl und Kunststoff, der so genannten Hybridbauweise, beruhen.

So ist etwa aus der DE 38 17 842 A1 eine Stoßfängeranordnung für ein Kraftfahrzeug bekannt, die über einen als Aluminium-Strangpreßprofil ausgebildeten Stoßfängerträger, verfügt, der über Stützen an der Fahrzeugkarosserie befestigt und mit einem Stoßfängerüberzug aus festem Kunststoff versehen wird. Der Stoßfängerüberzug ist als U-Profil ausgeführt, das durch Aufstecken an dem Stoßfängerträger befestigt wird. Weiterhin ist eine Kunststoffschürze vorgesehen, die ebenfalls mit der Karosserie verbunden ist, und die einen Hohlraum aufweist, in den der Stoßfänger eingesetzt wird. Der Hohlraum ist derart bemessen, dass der Stoßfänger bei einer Belastung, bspw. aufgrund eines Aufpralls, elastische Durchbiegungen und Verschiebungen frei innerhalb des Hohlraums ausführen kann.

Ferner wird in der DE 102 32 321 A1 zur Gewichtsreduzierung einer Tragstruktur im Frontbereich eines Kraftfahrzeugs ein Stoßfängerträger vorgeschlagen, der aus einem schalenförmigen Metallprofil besteht, in das ein Kunststoffbauteil formschlüssig eingesetzt ist. Bei der in dieser Druckschrift vorgeschlagenen technischen Lösung ist das Kunststoffbauteil derart mit Versteifungsrippen verstärkt, dass auf den Stoßfänger einwirkende Kräfte sowohl von dem Metallprofil als auch von dem Kunststoffbauteil aufgenommen werden, ohne dass es zu einer wesentlichen Verformung des Kunststoffes kommt. Auf diese Weise soll sichergestellt werden, dass die Wandstärke des Metallprofils verringert werden kann, ohne dass diese Maßnahme zu Einbußen hinsichtlich der Festigkeit des Stoßfängerträgers führt.

Aus der DE 199 19 258 A1 ist ein Frontendmodul bekannt, das mit einer Fahrzeugkarosserie verbindbar ist und das über ein Tragelement verfügt, an dem sowohl der Stoßfängerträger, Verkleidungselemente als auch Funktionselemente, wie Scheinwerfer oder Kühler, befestigt werden. Das Tragelement ist als Rahmen aus einem glasfaser- oder glasmattenverstärkten Kunststoff hergestellt. An hochbelasteten Stellen des Tragelements sind aus Blech gefertigte Versteifungselemente vorgesehen. Mit einem derartigen Frontmodul soll zum einen ein gutes Crashverhalten sicher gestellt werden, und zum anderen ein Tragelement mit geringem Gewicht bereitgestellt werden, in dem eine Vielzahl von Funktionselementen integriert werden können.

Darüber hinaus beschreibt die FR 2 481 218 eine Kunststoffträgereinheit für einen Personenkraftwagen, die ein Stützelement zur Aufnahme von Funktionselementen, wie beispielsweise Scheinwerfer, aufweist und die darüber hinaus über einen Stoßfängerträger verfügt, an dem eine Stoßfängerblende befestigt ist. Die beschriebene Kunststoffträgereinheit verfügt allerdings über teilweise erhebliche Wandstärken und weist Im Hinblick auf die erforderliche Festigkeit eine aufwendige Formgestaltung auf.

Problematisch an den aus dem Stand der Technik bekannten technischen Lösungen ist somit entweder, dass sie aufgrund der Verwendung metallischer Bauteile über ein verhältnismäßig hohes Gewicht verfügen oder, dass sie mit relativ hohem fertigungstechnischen Aufwand herzustellen sind bzw. aus unterschiedlichen Komponenten zusammengefügt werden. Ferner ist zu berücksichtigen, dass die bekannten Stützkonstruktionen entweder stahl- oder leichtmetallhaltige Bauteile, an denen Kunststoffbauteile befestigt werden, oder komplizierte Geometrien aufweisen, so dass die Stützkonstruktionen aus dem Stand der Technik bekannten Konstruktionen sehr toleranzempfindlich sind. Außerdem ist nicht auszuschließen, dass die Montage der einzelnen Komponenten aus verschiedenartigen Werkstoffen zu einer Fugenbildung zwischen den Komponenten führt.

Neben dem nicht unerheblichen Gewicht bestehen somit auch hinsichtlich der Herstellung einer Tragstruktur für den Frontbereich eines Kraftfahrzeugs erhebliche fertigungstechnische und somit auch wirtschaftliche Probleme, die vor allem auf die Längenausdehnungen zwischen der Stützkonstruktion und den übrigen Bauteilen, die Korrosionsempfindlichkeit der Stützkonstruktionen sowie auf den auftretenden Schweißverzug zurückzuführen sind.

Ausgehend von dem bekannten Stand der Technik liegt der Erfindung daher die Aufgabe zu Grunde, eine Tragstruktur für den Frontbereich eines Kraftfahrzeugs anzugeben, deren Gewicht vergleichsweise gering ist und die auch unter Einsatz fertigungstechnisch einfacher Mittel mit hoher Genauigkeit herstellbar und mit dem Fahrzeugrahmen verbindbar ist. Darüber hinaus soll die Tragstruktur derart ausgeführt sein, dass eine einfache Montage und Wartung verschiedener, im Frontbereich eines Kraftfahrzeugs vorgesehener Anbauteile möglich ist.

Für die Lösung der vorgenannten Aufgabe wird eine Trägereinheit für einen Frontbereich eines Kraftfahrzeugs eingesetzt, die einerseits ein Stützelement und einen Stoßfängerträger, an dem zumindest ein Element zur Anbringung wenigstens eines Stoßfängerbauteils vorgesehen ist, aufweist, und die andererseits über ein Befestigungselement verfügt, mit dem das Stützelement mit wenigstens einem Rahmen des Kraftfahrzeugs verbindbar ist, wobei das Stützelement und der Stoßfängerträger als einstückige Kunststoffträgereinheit ausgeführt sind, die sowohl zumindest ein Aufnahmelement aufweist, an dem wenigstens eine Stoßfängerblende befestigbar ist als auch über wenigstens eine Aufnahmestruktur verfügt, an der ein Funktionselement des Kraftfahrzeugs befestigbar ist und die über Befestigungsstrukturen verfügt, an denen zumindest ein Karosserieverkleidungselement befestigbar ist. Die einstückige Kunststoffträgereinheit verfügt in diesem Fall über wenigstens eine Aufnahmestruktur, an der wenigstens ein Funktionselement des Kraftfahrzeugs befestigbar ist. Unter Funktionselement sind hierbei sämtliche, im Frontbereich eines Kraftfahrzeugs vorgesehene Fahrzeuganbauteile zu verstehen, die während der Fahrt und/oder der Standzeit des Fahrzeugs eine Funktion übernehmen können. Hierbei kann es sich sowohl um Teile der Lichtanlage, wie bspw. die Scheinwerfer und/oder die Blinker, um die Hupe, Sensorsysteme, insbesondere ein Abstandsmesssystem, als auch den Kühler bzw. Teile des Kühlers handeln. Da die Kunststoffträgereinheit erfindungsgemäß einstückig ausgeführt ist, kann nahezu eine beliebige Anzahl von Aufnahmestrukturen für die verschiedensten Funktionselemente vorgesehen werden.
Erfindungsgemäß zeichnet sich die zuvor beschriebene, als einstückige Kunststoffträgereinheit ausgeführte Trägereinheit dadurch aus, dass sie im Frontbereich eines Lastkraftwagens anbringbar ist und die einstückige Kunststoffträgereinheit im Mittelteil über rippenförmigen Verstrebungen verfügt.

Mit der erfindungsgemäßen Trägereinheit für den Frontbereich eines Lastkraftwagens wird ein Bauteil bereitgestellt, das auf Grund seiner einstückigen Bauweise einfach herzustellen und in der Montage bequem zu handhaben ist. Ursache für die einfache Handhabung ist vor allem, dass die erfindungsgemäße Trägereinheit vollständig aus Kunststoff hergestellt ist, so dass das Bauteil verhältnismäßig leicht ist. Darüber hinaus stellt die einstückige Bauweise sicher, dass ohne großen zusätzlichen Aufwand während der Herstellung des Kunststoffbauteils weitere Elemente an der Trägereinheit vorgesehen werden können, die später in der Montage bspw. zur Befestigung von Anbauteilen und/oder als Fixierhilfen dienen.

Die einstückige Kunststoffträgereinheit ist rahmenförmig ausgebildet, wobei der Rahmen in Art eines Fachwerks ausgeführt ist, der an besonders stark belasteten Stellen entsprechende Verstärkungen aufweist. Als Verstärkungen sind in diesem Zusammenhang insbesondere auch spezielle Rippen innerhalb der in Art eines Fachwerks ausgebildeten, rahmenförmigen Kunststoffträgereinheit anzusehen, die einen, gegenüber weniger beanspruchten Rippen, vergrößerten Durchmesser bzw. Umfang, der auf eine größere Materialstärke zurückzuführen ist, aufweisen.

Um die vorgenannten Verstärkungen zu erzielen, ist es denkbar, dass an den entsprechenden Stellen Kunststoffe mit verbesserten Festigkeitswerten, Materialverstärkungen und/oder zusätzliche Verstrebungen vorgesehen werden. In einer weiteren bevorzugten Ausführungsform weist die einstückige Kunststoffträgereinheit wenigstens eine Befestigungsstruktur auf, an der eine Karosserieverkleidung befestigbar ist.

Auf diese Weise ist es möglich, ohne großen Aufwand sowohl den Stoßfänger, als auch die im Frontbereich eines Kraftfahrzeugs vorgesehenen Verkleidungselemente, wie bspw. Kühlerblende, Frontverkleidungen oder andere Blenden, zu befestigen. In diesem Zusammenhang ist es denkbar, die Befestigungsstrukturen an der Kunststoffträgereinheit in Form von Schraubdomen auszuführen, in die während der Montage einer Karosserieverkleidung gewindeschneidende bzw. gewindeformende Schrauben eingedreht werden. Als bevorzugte Ausführungsform der Befestigungsstrukturen kommen aber auch Aufnahmeelemente in Frage, in die durch einfaches Eindrücken eines an einem Anbauteil vorgesehenen Gegenstücks die Befestigung einer Karosserieverkleidung an der Kunststoffträgereinheit verwirklicht wird.

Die Aufnahmestruktur ist vorzugsweise derart ausgebildet, dass die Funktionselemente auf einfache Weise mit der Kunststoffträgereinheit verbindbar sind. Darüber hinaus ist es denkbar, die Aufnahmestruktur derart auszubilden, dass eine einfache Wartung der Funktionselemente auf Grund einer guten Zugänglichkeit sicher gestellt ist. Etwa könnte ein Scheinwerfer schwenkbar angeordnet werden, um bei einem erforderlichen Austausch der Scheinwerferlampen, eine leichte Zugänglichkeit der Lampen zu gewährleisten.

Das Vorsehen einer entsprechenden Aufnahmestruktur ermöglicht sogar auf besonders bevorzugte Weise in der Fahrzeugfertigung die Vormontage des Frontbereichs eines Fahrzeugs, so dass schließlich die Trägereinheit mit einer Vielzahl von Anbauteilen als Gesamteinheit an dem Fahrzeugrahmen befestigbar ist.

In einer weiteren speziellen Ausgestaltung der erfindungsgemäßen Trägereinheit ist eine Kunststoffträgereinheit vorgesehen, die wenigstens teilweise einen Kunststoff aufweist, der langfaserverstärkt ausgeführt ist. Als Kunststoff kann sowohl ein Duro- als auch ein Thermoplast verwendet werden. Besonders eignet sich in diesem Zusammenhang die Verwendung eines SMC-Kunststoffs (Sheet Moulding Compound), der vorzugsweise zumindest teilweise mit Glasfasern verstärkt ist. Hierbei ist es durchaus denkbar, die Glasfasern in Form von Glasmatten in den Kunststoff einzubringen. Bei einer speziellen Ausführungsform der erfindungsgemäßen Trägereinheit ist ein Anteil von 30 Gew% Glasfasern an dem gesamten für die Kunststoffträgereinheit verwendeten Kunststoff vorgesehen. Ferner hat sich gezeigt, dass der Einsatz eines Kunststoffs, der zumindest teilweise ein ungesättigtes Polyesterharz aufweist, ganz besonders für die Kunststoffträgereinheit geeignet ist.

Die erfindungsgemäße Trägereinheit ist für den Einsatz in einem in einem Nutzfahrzeug vorgesehen. Auf Grund der Gestaltung der Trägereinheit ist diese im Frontbereich von Nutzfahrzeugen, und hierbei insbesondere bei Lastkraftwagen mit einem zulässigen Gesamtgewicht von über 7500 kg, einzusetzen. Dies ist vor allem darauf zurückzuführen, dass eine einstückig ausgeführte Kunststoffträgereinheit, an der wenigstens ein Stoßfängerbauteil oder auch weitere Anbauteile zu befestigen sind, erhebliche Vorteile hinsichtlich der Fertigungstoleranzen gegenüber herkömmlichen Frontmodulen hat. Außerdem ist eine derartige Trägereinheit, die vorzugsweise bereits im Vorfeld der Hauptbandmontage mit Anbauteilen vormontiert wird, wesentlich einfacher als bisher im Nutzfahrzeug verwendete Frontmodule zu montieren.

Die Bereitstellung der erfindungsgemäßen, vorzugsweise für die vorgenannten Nutzfahrzeuge geeigneten Trägereinheit erfolgt mit einem speziellen Verfahren, das auf den folgenden Herstellungsschritten beruht:
- urformende Fertigung einer rahmenförmigen Kunststoffträgereinheit,
- Verbinden wenigstens eines Stoßfängerelementes mit der Kunststoffträgereinheit sowie
- Befestigen der Kunststoffträgereinheit am Rahmen des Kraftfahrzeugs.

Mit Hilfe der urformenden Fertigung wird eine einstückige, rahmenförmige Kunststoffträgereinheit erzeugt. Unter urformender Fertigung ist in diesem Zusammenhang ein Herstellungsverfahren zu verstehen, bei dem durch Schaffen eines Zusammenhalts aus formlosem Stoff ein geometrischer Körper mit bestimmten Werkstück- und Werkstoffeigenschaften erzeugt wird. Der formlose Ausgangszustand kann hierbei gasförmig, flüssig oder auch fest, insbesondere körnig oder pulverförmig, sein. Vorzugsweise eignen sich als Fertigungsverfahren sowohl das SMC- (Sheet Molding Compound) als auch das RTM-Verfahren (Resin Transfer Molding). Es ist aber auch denkbar eine derartige Trägereinheit mittels Handlaminierens herzustellen.

Die Befestigung der Kunststoffträgereinheit am Rahmen, insbesondere dem Rahmenfrontend, erfolgt vorzugsweise, indem die Einheit mit am Fahrzeugrahmen vorgesehenen Trägerelementen verschraubt wird. Wahlweise vor oder nach der Befestigung der Kunststoffträgereinheit am Rahmen erfolgt die Anbringung des wenigstens einen Stoßfängerelements an der Trägereinheit. In einer besonderen Ausführungsform handelt es sich bei einem Stoßfängerelement um einen Kunststoffüberzug, der durch einfaches Andrücken mit der Kunststoffträgereinheit verbunden wird.

Da die Kunststoffträgereinheit urformend hergestellt wird und daher über eine hohe Maßhaltigkeit und Dimensionsstabilität verfügt, ist sie vorzugsweise als Montagevorrichtung einsetzbar, so dass keine gesondert hergestellten, teuren Vorrichtungen benötigt werden. Eine besondere Ausführungsform des erfindungsgemäßen Herstellungsverfahrens sieht daher lediglich die Verwendung einer einfachen Fixiervorrichtung vor, um die Trägereinheit während des Montagevorgangs sicher zu positionieren.

Für den Einsatz der vorgeschlagenen Trägereinheit ist es ferner besonders vorteilhaft, wenn in der einstückigen Kunststoffträgereinheit Öffnungen und/oder Durchbrüche derart vorgesehen werden, dass Montagevorgänge bzw. Einstellarbeiten von Anbauteilen, die hinter der Trägereinheit angeordnet sind, vorgenommen werden können, ohne dass die Trägereinheit hierzu entfernt werden muss.

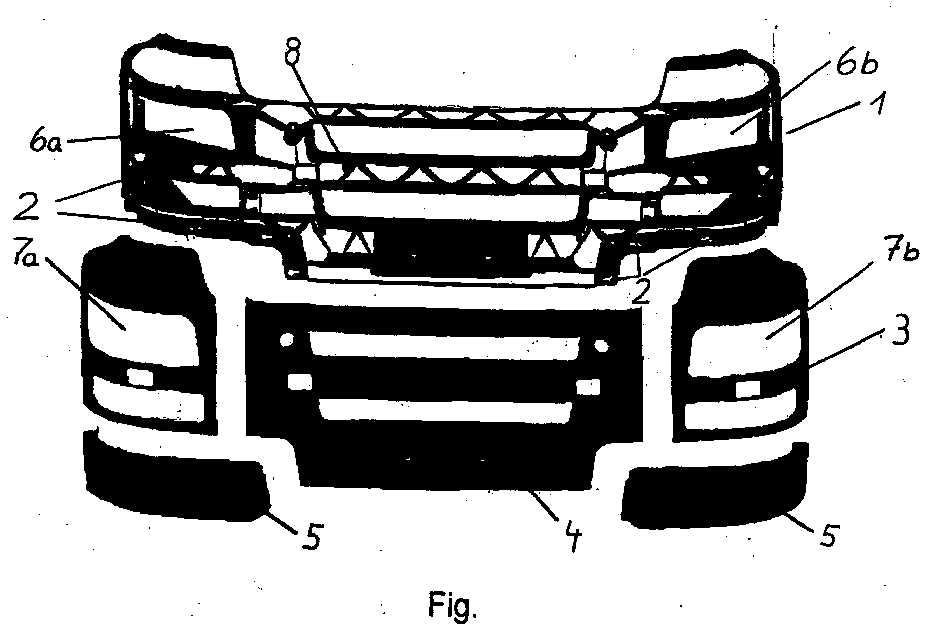

Im Folgenden wird die Erfindung an Hand von Ausführungsbeispielen unter Zuhilfenahme der Figur, ohne Beschränkung des allgemeinen Erfindungsgedankens, näher beschrieben. Es zeigt:
- Fig. :: Kunststoffträgereinheit mit Anbauteilen

In der Figur ist eine Kunststoffträgereinheit 1 eines Lastkraftwagens dargestellt, die über Befestigungsstrukturen 2 verfügt, mit Hilfe derer sowohl Karosserieverkleidungselemente 3, 4 als auch Stoßfängerelemente 5 an der Trägereinheit 1 befestigbar sind. Die Kunststoffträgereinheit 1 übernimmt hierbei sowohl die Funktion eines Stützelementes als auch eines Stoßfängerträgers. Als Karosserieverkleidungselemente sind die Seitenteile 3 und das Frontmittelteil 4 dargestellt. Die Stoßfängerblenden 5 stellen jeweils Eckteile dar, die über entsprechende Befestigungsstrukturen 2 an der Kunststoffträgereinheit 1 befestigt werden.

Die Kunststoffträgereinheit 1 verfügt ferner über eine Vielzahl von Aufnahmestrukturen 6, an denen Funktionselemente (nicht dargestellt) des Lastkraftwagens zu befestigen sind. So sind an den Ausnehmungen 6a, 6b Aufnahmestrukturen in Form von Schraubdomen, in die gewindeschneidende Schrauben einschraubbar sind, vorgesehen, um die Fahrzeugscheinwerfer zu befestigen. Um während des Betriebs des Lastkraftwagens ein einfaches Wechseln der Lampen in den Scheinwerfern zu ermöglichen, werden die Scheinwerfer schwenkbar an der Kunststoffträgereinheit befestigt, wobei die Ausnehmungen 7a, 7b in den Seitenteilen 3 derart dimensioniert sind, dass der Scheinwerfer durch die Verkleidung geschwenkt werden kann.

Im Mittelteil verfügt die Kunststoffträgereinheit 1 über rippenförmige Verstrebungen 8, die eine ausreichende Steifigkeit der Trägereinheit 1 gewährleisten sollen. Da die Kunststoffträgereinheit 1 nach abgeschlossener Montage weitgehend durch die Karosserieverkleidungselemente 3, 4 verdeckt ist, muss nicht mehr auf eine entsprechende Oberflächenqualität geachtet werden, sondern die Trägereinheit 1 kann nahezu ausschließlich unter dem Gesichtspunkt der Steifigkeit bzw. Festigkeit ausgelegt werden. Somit ist es möglich, funktionelle Ausnehmungen, wie bspw. die Ausnehmungen für die Scheinwerfer 6a, 6b, vorzusehen und/oder Öffnungen in die Kunststoffträgereinheit 1 einzubringen, um im Montage- und/oder Wartungsfall einen besseren Zugang zu den hinter der Trägereinheit 1 liegenden Bauteilen, etwa das Kühlpaket oder die Lenkung (nicht dargestellt), sicher zu stellen.

### Bezugszeichenliste

- 1: Kunststoffträgereinheit
- 2: Befestigungsstrukturen
- 3: Seitenteil
- 4: Frontmittelteil
- 5: Stoßfängerblende
- 6: Aufnahmestruktur
- 6a, 6b: Ausnehmungen in der Kunststoffträgereinheit
- 7a, 7b: Ausnehmungen in den Seitenteilen
- 8: Verstrebung

## Patentansprüche

1. Kraftfahrzeug mit einer Trägereinheit im Frontbereich, die ein Stützelement und einen Stoßfängerträger, an dem zumindest ein Element zur Anbringung wenigstens einer Stoßfängerblende (5) vorgesehen ist, aufweist und die über ein Befestigungselement verfügt, mit dem das Stützelement mit wenigstens einem Rahmen des Kraftfahrzeugs verbindbar ist, wobei das Stützelement und der Stoßfängerträger als einstückige Kunststoffträgereinheit (1) ausgeführt sind, die sowohl zumindest ein Aufnahmelement aufweist, an dem wenigstens eine Stoßfängerblende (5) befestigbar ist als auch über wenigstens eine Aufnahmestruktur verfügt, an der ein Funktionselement des Kraftfahrzeugs befestigbar ist und die über Befestigungsstrukturen (2) verfügt, an denen zumindest ein Karosserieverkleidungselement (3, 4) befestigbar ist,
**dadurch gekennzeichnet, dass** das Kraftfahrzeug als Lastkraftwagen ausgeführt ist und die einstückige Kunststoffträgereinheit im Mittelteil über rippenförmigen Verstrebungen (8) verfügt.

2. Kraftfahrzeug nach Anspruch 1, **dadurch gekennzeichnet, dass** das Stützelement rahmenförmig ausgebildet ist.

3. Kraftfahrzeug nach Anspruch 1 oder 2, **dadurch gekennzeichnet, dass** die einstückige Kunststoffträgereinheit (1) wenigstens eine Befestigungsstruktur aufweist, an der eine Karosserieverkleidung (3, 4) befestigbar ist.

4. Kraftfahrzeug nach einem der Ansprüche 1 bis 3, **dadurch gekennzeichnet, dass** die Kunststoffträgereinheit (1) wenigstens teilweise einen Kunststoff aufweist, der Langfaser verstärkt ausgeführt ist.

5. Kraftfahrzeug nach Anspruch 4, **dadurch gekennzeichnet, dass** der Kunststoff wenigstens teilweise einen SMC-Kunststoff (Sheet Molding Compound) aufweist.

6. Kraftfahrzeug nach Anspruch 4 oder 5, **dadurch gekennzeichnet, dass** der Kunststoff wenigstens teilweise Glasfaser verstärkt ist.

7. Kraftfahrzeug nach einem der Ansprüche 4 bis 6, **dadurch gekennzeichnet, dass** der Kunststoff über einen Anteil von 30 Gew% Glasfasern verfügt.

8. Kraftfahrzeug nach einem der Ansprüche 4 bis 7, **dadurch gekennzeichnet, dass** der Kunststoff zumindest teilweise einen ungesättigten Polyesterharz aufweist.

9. Kraftfahrzeug nach einem der Ansprüche 4 bis 8, **dadurch gekennzeichnet, dass** der Kunststoff ein Glasmatten verstärkter Thermoplast ist.

10. Kraftfahrzeug nach einem der Ansprüche 4 bis 9, **dadurch gekennzeichnet, dass** der Kunststoff ein Glasmatten verstärkter Duroplast ist.

11. Kraftfahrzeug nach einem der Ansprüche 1 bis 10, **dadurch gekennzeichnet, dass** das Stützelement über das Befestigungselement an einem Frontend des Rahmens befestigbar ist.

## Claims

1. Motor vehicle with a carrier unit in the front area, which carrier unit has a support element and a bumper carrier to which at least one element for attaching at least one bumper panel (5) is fastened and which carrier unit features a fastening element via which the support element can be connected with at least one frame member of the motor vehicle, whereby the support element and the bumper carrier are designed as a single-piece synthetic carrier unit (1) featuring both at least one holder element to which at least one bumper panel (5) can be fastened and at least one support structure to which a functional element of the motor vehicle can be fastened and which features fastening structures (2) to which at least one chassis cladding element (3, 4) can be fastened, **characterised in that** the motor vehicle is designed as a truck and that the centre portion of the single-piece synthetic carrier element is equipped with rib-type struts (8).

2. Motor vehicle according to Claim 1, **characterised in that** the support element is shaped like a frame.

3. Motor vehicle according to Claim 1 or 2, **characterised in that** the single-piece synthetic carrier unit (1) features at least one fastening structure to which a chassis panel (3, 4) can be fastened.

4. Motor vehicle according to one of the Claims 1 to 3, **characterised in that** the synthetic carrier unit (1) at least partially features a synthetic material reinforced by long fibres.

5. Motor vehicle according to Claim 4, **characterised in that** the synthetic material at least partially features an SMC synthetic material (Sheet Moulding Compound).

6. Motor vehicle according to Claim 4 or 5, **characterised in that** the synthetic material is at least partially reinforced by glass fibre.

7. Motor vehicle according to one of the Claims 4 to 6, **characterised in that** the synthetic material has a glass fibre content of 30 per cent by weight.

8. Motor vehicle according to one of the Claims 4 to 7, **characterised in that** the synthetic material at least partially features an unsaturated polyester resin.

9. Motor vehicle according to one of the Claims 4 to 8, **characterised in that** the synthetic material is a glass-mat-reinforced thermoplastic.

10. Motor vehicle according to one of the Claims 4 to 9, **characterised in that** the synthetic material is a glass-mat-reinforced duroplastic.

11. Motor vehicle according to one of the Claims 1 to 10, **characterised in that** the support element can be fastened via the fastening element to a front end of the frame.

## Revendications

1. Véhicule à moteur avec unité porteuse dans la partie avant, qui présente un élément support et un support de pare-chocs sur lequel est prévu au moins un élément pour mettre en place au minimum un cache de pare-chocs (5) et qui dispose d'un élément de fixation avec lequel l'élément support peut être relié au moins à un cadre de véhicule à moteur, auquel cas l'élément support et le support de pare-chocs sont conçus comme unité porteuse monobloc en matériau composite (1) qui présente un élément de fixation sur lequel peut être fixé au minimum un cache de pare-chocs (5) et dispose d'au moins une structure de réception sur laquelle un élément de fonction du véhicule à moteur peut être fixé et qui dispose de structures de fixation sur lesquelles au moins un élément d'habillage de carrosserie peut être fixé,
**caractérisé en ce que** le véhicule à moteur est conçu comme camion poids lourd et l'unité porteuse monobloc en matériau composite dispose de renforts (8) en forme de barres dans la partie centrale.

2. Véhicule à moteur selon la revendication 1, **caractérisé en ce que** l'élément support est conçu en forme de cadre.

3. Véhicule à moteur selon la revendication 1 ou 2, **caractérisé en ce que** l'unité porteuse monobloc en matériau composite (1) présente au moins une structure de fixation sur laquelle peut être fixé un habillage de carrosserie (3, 4).

4. Véhicule à moteur selon l'une des revendications 1 à 3, **caractérisé en ce que** l'unité porteuse en matériau composite (1) présente au moins partiellement un élément en matériau composite qui est renforcé par des fibres longues.

5. Véhicule à moteur selon la revendication 4, **caractérisé en ce que** le matériau composite présente au moins partiellement un matériau composite SMC (matériau composite thermodurci à fibres longues).

6. Véhicule à moteur selon la revendication 4 ou 5, **caractérisé en ce que** le matériau composite est au moins partiellement renforcé par des fibres de verre.

7. Véhicule à moteur selon l'une des revendications 4 à 6, **caractérisé en ce que** le matériau composite dispose d'une part pondérale de 30 % de fibres de verre.

8. Véhicule à moteur selon l'une des revendications 4 à 7, **caractérisé en ce que** le matériau composite présente au moins partiellement une résine polyester non saturée.

9. Véhicule à moteur selon l'une des revendications 4 à 8, **caractérisé en ce que** le matériau composite est un thermoplastique renforcé par des bandes de fibres de verre.

10. Véhicule à moteur selon l'une des revendications 4 à 9, **caractérisé en ce que** le matériau composite est un duroplaste renforcé par des bandes de fibres de verre.

11. Véhicule à moteur selon l'une des revendications 1 à 10, **caractérisé en ce que** l'élément support peut être fixé sur un élément d'extrémité avant du cadre par le biais d'un élément de fixation.
